# EUROPEAN PATENT APPLICATION

(11) **EP 3 461 089 A1**
(43) Date of publication of application: **27.03.2019**
(21) Application number: 18152881.1
(22) Date of filing: 23.01.2018
(51) Int. Cl.: H04L 12/931, H04L 12/935

(54) **ROLE-BASED AUTOMATIC CONFIGURATION SYSTEM AND METHOD FOR ETHERNET SWITCHES**

(30) Priority: 20.09.2017 US 201715710560
(71) Applicant: Quanta Computer Inc., Taoyuan City 333 (TW)
(72) Inventor: Li, Cheng-Hsun, Taoyuan City 333 (TW); Shih, Ching-Chih, Taoyuan City 333 (TW)
(74) Representative: Michalski Hüttermann & Partner Patentanwälte mbB

(57) **Abstract**

A method and system to automatically configure a port on an Ethernet switch is disclosed. An Ethernet switch including a port connectable to a node is provided. A system node is coupled to the port of the Ethernet switch. The node sends a discovery packet to the Ethernet switch. The discovery packet includes role identity information of the node. The Ethernet switch determines whether the role identity information is matched with a role identification. The Ethernet switch configures the port from configuration data associated with the role identification.

## Description

### TECHNICAL FIELD

The present disclosure relates generally to configuring ports for distributed network systems. More particularly, aspects of this disclosure relate to using neighboring discovery protocol for configuring different ports on an Ethernet switch.

### BACKGROUND

Distributed network systems have been widely adopted with the emergence of an application such as the cloud for computing applications. In a distributed network system, especially those used in data centers, it is common practice to use separate networks for different purposes. For example, there can be a network for connecting all management controllers of nodes in the distributed network system. Such management controllers could be management controllers of computers, Ethernet switches, mobile devices, etc., and such a network is termed a management network. There are other networks that are for other purposes such as a network connecting network adapter cards of computer systems and some physical ports of Ethernet switches together to form a network topology for certain usages. Such networks may be termed data networks.

In management networks, one of the main challenges that administrators deal with daily is to ensure different configurations are correctly applied to the ports of Ethernet switches that connect to different types of management controllers. Ensuring correct application of the different configurations for the ports of Ethernet switches is currently burdensome as it requires significant administrative time and resources. For example, administrators must prepare pre-defined specification data to specify the relationship between the role of all management controllers and the ports they connect to on an Ethernet switch (i.e., preparing network topology specification). With this information, management applications or administrators can know which MAC address corresponds to which kind of management controller and then appoint which configuration set should be used for the port. For example, ports on Ethernet switches in a management network may be configured for VLANs, port-based authentication, Layer2 Ethernet Interfaces or MAC table manipulation.

In known methods for configuring ports, specific ports of Ethernet switches must be pre-configured with certain configurations and constraints. When one of the corresponding controllers moves to a new port of some Ethernet switches, the new port must be configured again with administrator interventions and the new port cannot be automatically configured again. Alternatively, an active software application may keep polling information on all Ethernet switches in a system to know if any management controller has moved to a new port. This polling method may spend more time as the number of controllers that are managed is scaled up with expansion of the network.

Furthermore, in some already well-known software infrastructures such as Intel's Rack Scale Design API, or the Redfish API, applications can get the same kind of relationship from these APIs, then implement the business logic inside the application to achieve the same goal. But for web-oriented technology, systems usually use TCP/IP or higher level network protocol to retrieve necessary data from management mangers to identify the type of management manager, then apply the corresponding configuration to it.

Another similar technology is Intelligent Platform Management Interface (IPMI) commands, widely used with IP-based communication. Using IPMI commands, applications can get the same kind of information about management controllers such as network port MAC addresses or the type of device. However, the IPMI-based method is still not efficient because of the problem of configuring constraints of a MAC-layer related on Ethernet switches. It is desirable to constrain different ports with different configurations, but the correct port cannot be chosen until IP-based networking is running on these nodes if using IPMI-based communications. Thus, existing methods are inefficient in configuring the switches.

Thus, there is a need for automatic configuration of ports of Ethernet switches when a controller is connected to a port while avoiding the use of polling. There is a further need for using a discovery protocol from a new controller to automatically apply different configurations based on policy data to an Ethernet switch port. There is also a need for changing the configuration of ports of Ethernet switches automatically without having to load a new policy from a control node.

### SUMMARY

One disclosed example is a system to automatically configure a port on an Ethernet switch. The system includes an Ethernet switch including a port connectable to a node. A node is coupled to the port of the Ethernet switch. The node sends a discovery packet to the Ethernet switch. The discovery packet includes role identity information of the node. The Ethernet switch determines whether the role identity information is matched to a role identification. The Ethernet switch configures the port from configuration data associated with the role identification.

Another example is a method of automatically configuring a port on an Ethernet switch. A system node is coupled to the port. A discovery packet including role identity information of the node is received from the system node. The role identity information of the node is matched to a role identification to determine associated port configuration data. The port is configured with the associated port configuration data.

Another example is an Ethernet switch that automatically configures a port. The Ethernet switch includes a port connectable to a system node and a controller. The controller is operative to receive a discovery packet including role identity information of the node from the system node. The controller determines whether the role identity information matches a role identification having an associated port configuration. The controller configures the port with the associated port configuration data.

The above summary is not intended to represent each embodiment or every aspect of the present disclosure. Rather, the foregoing summary merely provides an exemplification of some of the novel aspects and features set forth herein. The above features and advantages, and other features and advantages of the present disclosure, will be readily apparent from the following detailed description of representative embodiments and modes for carrying out the present invention when taken in connection with the accompanying drawings and the appended claims.

### BRIEF DESCRIPTION OF THE DRAWINGS

The disclosure will be better understood from the following description of exemplary embodiments together with reference to the accompanying drawings, in which:
FIG. 1 shows block diagram of a switching network management system;
FIG. 2 is a block diagram of one of the subsystems in the switching network management system of FIG. 1;
FIG. 3 is a diagram of a discovery packet including role identity data that is sent to an Ethernet switch in the switching network system for configuring a port;
FIG. 4A is a diagram of a discovery packet that includes an authentication code that is sent to an Ethernet switch in the switching network system for configuring a port;
FIG. 4B is a flow diagram showing how an authentication protocol may be used for configuring a port; and
FIG. 5 is a flow diagram of the process of determining the configuration of a port in the switches in the system shown in FIG. 1.

The present disclosure is susceptible to various modifications and alternative forms, and some representative embodiments have been shown by way of example in the drawings and will be described in detail herein. It should be understood, however, that the invention is not intended to be limited to the particular forms disclosed. Rather, the disclosure is to cover all modifications, equivalents, and alternatives falling within the spirit and scope of the invention as defined by the appended claims.

### DETAILED DESCRIPTION OF THE ILLUSTRATED EMBODIMENTS

The present inventions can be embodied in many different forms. There are shown in the drawings, and will herein be described in detail, representative embodiments with the understanding that the present disclosure is to be considered as an exemplification or illustration of the principles of the present disclosure and is not intended to limit the broad aspects of the disclosure to the embodiments illustrated. To that extent, elements and limitations that are disclosed, for example, in the Abstract, Summary, and Detailed Description sections, but not explicitly set forth in the claims, should not be incorporated into the claims, singly or collectively, by implication, inference, or otherwise. For purposes of the present detailed description, unless specifically disclaimed: the singular includes the plural and vice versa; and the word "including" means "including without limitation." Moreover, words of approximation, such as "about," "almost," "substantially," "approximately," and the like, can be used herein in the sense of "at, near, or nearly at," or "within 3-5% of," or "within acceptable manufacturing tolerances," or any logical combination thereof, for example.

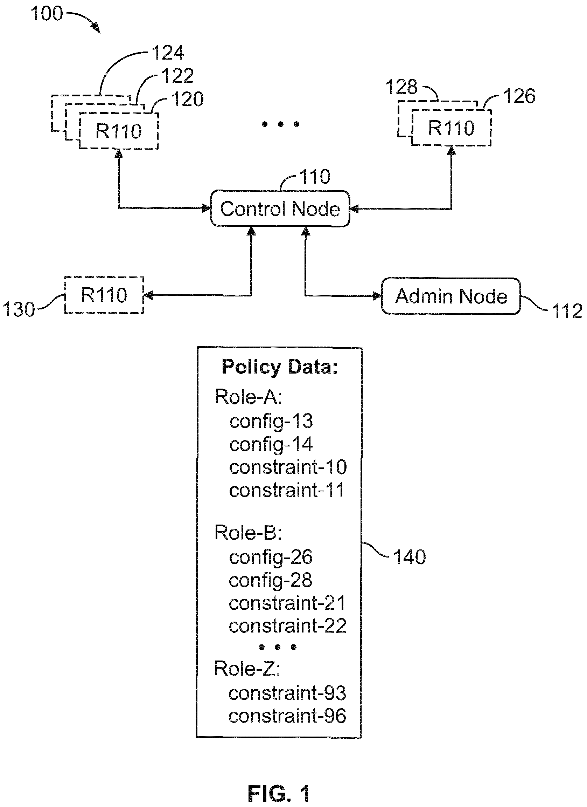

FIG. 1 shows an example switching network system 100 that includes a control node 110 and an administration node 112. The system 100 includes a number of subsystems such as switching subsystems 120, 122, 124, 126, 128, and 130. Each of the subsystems 120, 122, 124, 126, 128, and 130 may have one or more Ethernet switching devices. Each of the subsystems also have different nodes connected to the ports of the Ethernet switching devices. Each of the subsystems 120, 122, 124, 126, 128, and 130 may also include other kinds of devices such as management controllers that connect network ports to switching ports of the Ethernet switching devices. Of course any number of subsystems may be part of the switching network system 100. As will be explained below, the control node 110 contains a set of policy data which include pre-configured constraints and configurations for Ethernet switches.

As will be explained, in an Ethernet switching network environment such as the switching network 100, configuration data may be applied to ports of the Ethernet switches of the subsystems with more flexibility, more mobility, and more efficiency. Constraint data may also be applied to the ports of the Ethernet switches.

The switching devices of the subsystems 120, 122, 124, 126, 128, and 130 have management ports connected to the external control node 110 that contain business logic policy data. The policy data defines configuration settings that are applied to the ports of switching devices when network ports of the management controllers of the subsystems are connected to the switching devices of the subsystems. The administration node 112 functions to update policy data to the external control node 110. The policy data may be updated by the administration node 112 at any time. It is to be understood that the administration node 112 may be part of the control node 110 or may be connected to the control node 110 via a network connection.

The subsystems such as the subsystem 130 may initially fetch all or a subset of policy data from the control node 110 on the capability of the subsystem 130 such as a policy data set 140. The policy data set typically contains different role identifications that could be assumed by subsystem nodes and matching port configuration data and constraint data. Configuration data may include any features that can be configured on an Ethernet switch port to control something which would affect the connecting node. For example, configuration data may include VLAN control under 801.1Q that determines what VLANs can participate on the port. The configuration data in the VLAN example may be specified by the switch vendor. Another example of configuration data is an access control list that permits or denies the kind of IP packets going into or out of the port. Another example of configuration data is a quality of service or class of service configuration. Network switches have limited port bandwidth and computing resources. It is common practice to allocate different traffic bandwidth or traffic priority for different ports depending on the connecting nodes of the port based on the quality of service or class of service configuration.

Such policies may be stored in local memory for the Ethernet switch of the subsystem 130 to assist in port configuration. The subsystems such as the subsystem 130 can also query the control node 110 about missing policy data of a certain role later if there is a system node that joins the control node 110. The policy data is stored in the memory of the subsystem 130 for assistance in automatic configuration of the ports.

The network that is shown in FIG. 1 for both the management network and the subsystems may be a local area network environment employing any suitable interface mechanisms and communications technologies including, for example telecommunications in any suitable form (e.g., voice, modem, and the like), Public Switched Telephone Network (PSTNs), Ethernet-based Packet Data Networks (PDNs), combinations thereof, and the like. Moreover, local area networks may be made up of one or more interconnected LANs located in substantially the same geographic location or geographically separated, although the local area networks may include other types of networks arranged in other configurations. Moreover, the local area networks may include one or more additional intermediary and/or network infrastructure devices in communication with each other via one or more wired and/or wireless network links, such as switches, routers, modems, or gateways (not shown), and the like, as well as other types of network devices including network storage devices.

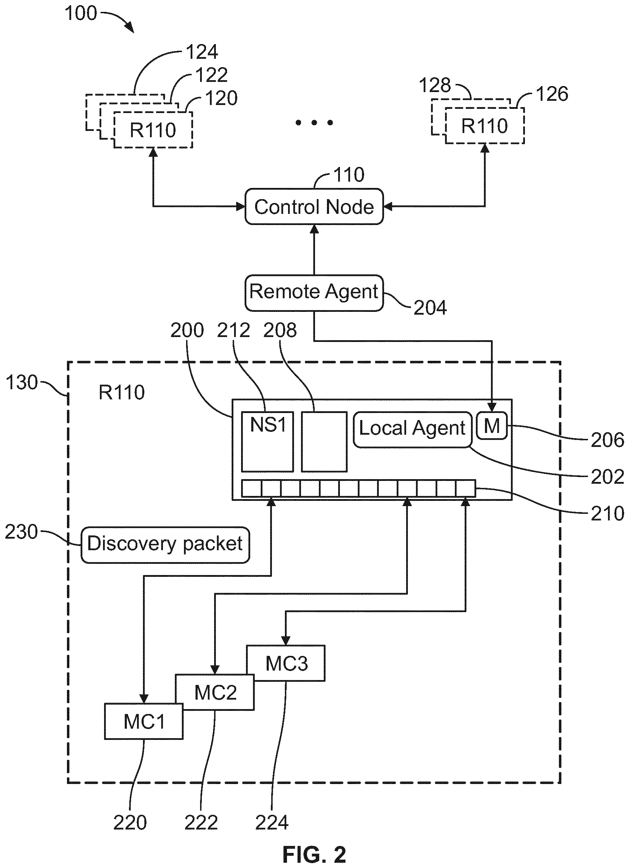

FIG. 2 is a block diagram showing the components of a representative subsystem 130 of the system 100. The subsystem 130 includes an Ethernet network switch 200 controlled by an agent. The subsystem 130 may include more than one Ethernet network switch similar to the switch 200. In this example, the agent can be implemented using a locally running program inside the network switch 200 such as a local agent 202, or an external remote running program hosted on remote node such as a remote agent 204. The locally or external running program may is a software management service provided by the Ethernet network switch 200 and may be implemented by a single or multiple processes. The remote agent 204 communicates with the network switch 200 via a management port 206. If the agent is the local agent 202, the network switch 200 communicates with the control node 110 through the management port 206. The agent communicates with a memory 208 that stores some or all of the policy data for the ports of the switch 200 from the control node 110. The policy data may be stored in the form of a database that includes roles of ports and associated configuration and constraint data. The agent also allows communication between the control node 110 and the network switch 200 via the management port 206. The network switch 200 has a series of ports 210 that may be connected to network devices or nodes. The network switch 200 includes a controller 212 that directs the operations of the network switch 200 including the configuration of the ports 210 and the communication with outside devices.

The subsystem 130 includes system nodes 220, 222, and 224 in this example. Each of the system nodes 220, 222, and 224 include respective management controllers. When a system node joins the subsystem 130, the management controller connects to one of the ports 210 of the Ethernet switch. In this example, the management controller of a system node such as the system node 220 that is connected to a port embeds application specific role identity information inside a discovery packet 230 to announce the role of the system node.

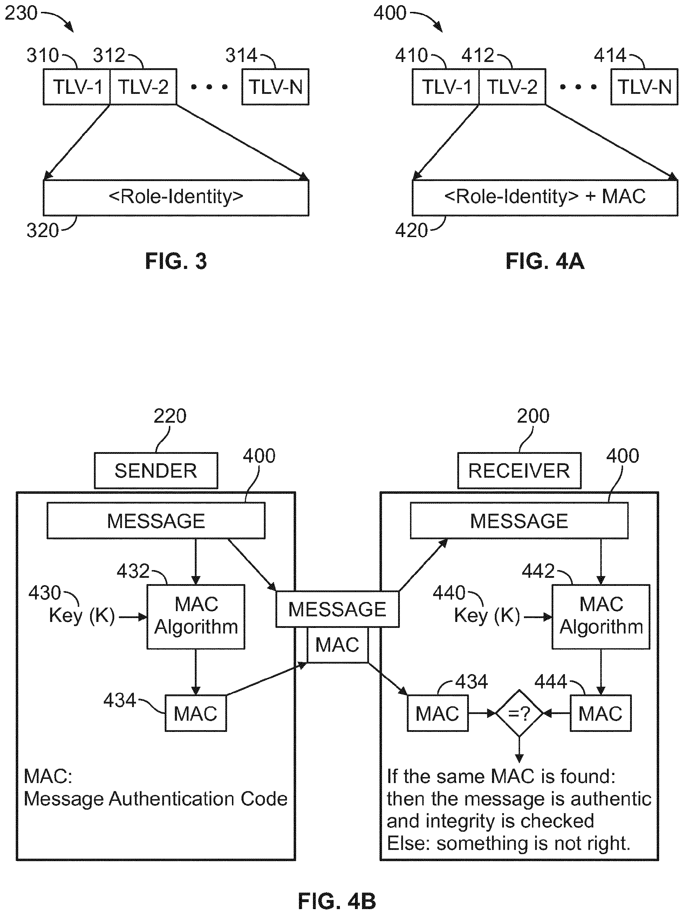

FIG. 3 is a diagram of an example discovery packet such as the discovery packet 230 in FIG. 2 that contains role identification information of the system node. In this example, the discovery packet 230 may be formatted according to a public networking protocol such as link layer discovery protocol (LLDP) or according to a proprietary protocol such as Cisco Discovery Protocol (CDP). The discovery packet 230 includes a sequence of time length value (TLV) structures 310, 312 and 314. Each of the time length value structures include an organizationally defined information string. In this example, one of the TLV structures 312 includes a role identity information string 320. The role identity information string 320 may be in any kind of data format such as a coarser trained type of management controller identification or a finer grained MAC address of the management controller.

In this example, the network switch 200 of the subsystem 130 allows configuration of ports on receiving the discovery packet 230 from a management controller of a new system node such as the node 220 that is connected to one of the ports 210 in FIG. 2. The network switch 200 receives the discovery packet 230 from the node 220 and retrieves the role identity information from the role identity information string 320 in FIG. 3. The network switch 200 uses the role identity information to query the policy database stored in the local memory 208. The policy database includes role identifications and associated port configuration and constraint data. If a matching role identification is found, the network switch 200 retrieves the associated configuration data from the database and applies the associated configuration data to the port corresponding to the node 220. In this manner the port is configured without the switch 200 having to communicate with the control node 110.

If there is no matching role identification found in the policy database stored in the memory 208, the network switch 200 queries the control node 110 via its management port 206. If the control node 110 has the matching role identification data, the control node 110 sends the policy data to the network switch 200. The network switch 200 can store the policy data in the database in the memory 208. The network switch 200 then applies the associated configuration data from the matching role identification of the policy data to the port corresponding to the new system node 220. If the control node 110 does not have matching role identification, then the control node 110 responds with an instruction to the network switch 200 to not apply any policy data. The network switch 200 will then apply default policy configuration data to configure the port.

If there are authentication concerns about received information from discovery packets, all system nodes and network switches in the system 100 may be provided with a secret key initially, and use message authentication code techniques for authentication. FIG. 4A is an example of a discovery packet 400 used to provide authentication in the system 100 before accepting the port identity data from the discovery packet and configuring a port on the switch 200 in FIG. 2.

The discovery packet 400 includes a sequence of time length value (TLV) structures 410, 412 and 414. Each of the time length value structures include an organizationally defined information string. In this example, one of the TLV structures 412 includes a role identity information string 420 that includes a message authentication code. The role identity information string 420 may be in any kind of data format such as a coarser trained type of management controller identification or a finer grained MAC address of the management controller.

FIG. 4B is a diagram showing the authentication process using the discovery packet 400 in FIG. 4A. In this example, the sender is the system node 220 in FIG. 2. As shown in FIG. 4B, the sender has a key 430 that is input to a message authentication code algorithm 432. The message authentication code algorithm 432 produces a message authentication code 434 that is sent with the discovery packet 400 to the receiver, which is the switch 200 in this example. The receiver has a key 440 that is input to a message authentication code algorithm 442. The message authentication code algorithm 442 is run by the receiver and produces a message authentication code 444. In order to authenticate the discovery packet 400, the receiver compares the received message authentication code 434 with the generated message authentication code 444. If the two codes 434 and 444 do not match, authentication fails.

If the two codes 434 and 444 match, the sender (system node 220) is confirmed and the role identity information string 420 is used as explained above to determine the configuration of the port that the sender (system node 220) is connected to.

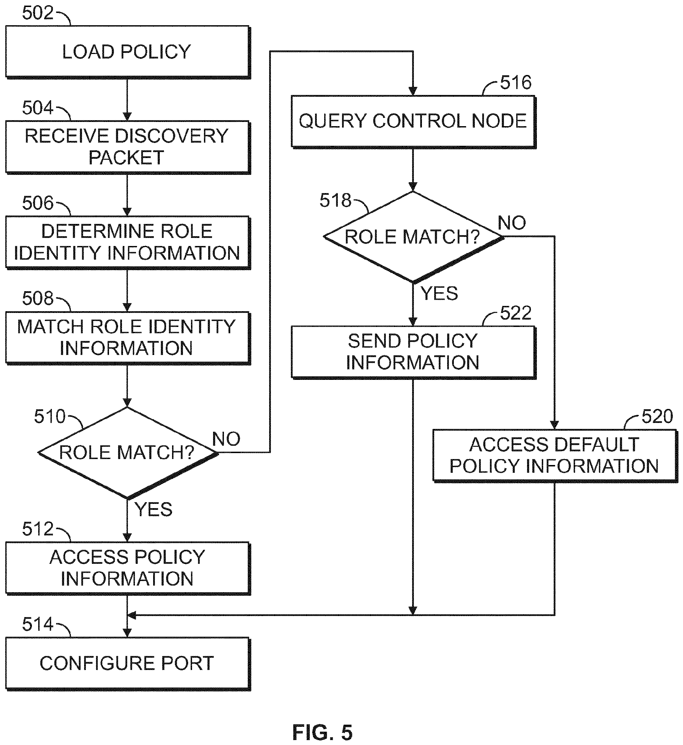

FIG. 5 shows a flow diagram of the code executed by the controller 212 of the network switch 200 to determine the policy for configuring a port in FIGs. 1 and 2. The flow diagram in FIG. 5 is representative of example machine readable instructions for the network switch in FIG. 2. In this example, the machine readable instructions comprise an algorithm for execution by: (a) a processor, (b) a controller, and/or (c) one or more other suitable processing device(s). The algorithm may be embodied in software stored on tangible media such as, for example, a flash memory, a CD-ROM, a floppy disk, a hard drive, a digital video (versatile) disk (DVD), or other memory devices, but persons of ordinary skill in the art will readily appreciate that the entire algorithm and/or parts thereof could alternatively be executed by a device other than a processor and/or embodied in firmware or dedicated hardware in a well-known manner (e.g., it may be implemented by an application specific integrated circuit (ASIC), a programmable logic device (PLD), a field programmable logic device (FPLD), a field programmable gate array (FPGA), discrete logic, etc.). For example, any or all of the components of the interfaces could be implemented by software, hardware, and/or firmware. Also, some or all of the machine readable instructions represented by the flowchart of FIG. 5 may be implemented manually. Further, although the example algorithm is described with reference to the flowcharts illustrated in FIG. 5, persons of ordinary skill in the art will readily appreciate that many other methods of implementing the example machine readable instructions may alternatively be used. For example, the order of execution of the blocks may be changed, and/or some of the blocks described may be changed, eliminated, or combined.

A policy is first loaded from the administration node 112 to the local memory of the subsystem such as the subsystem 120 (502). The policy may include configuration data that may be matched to node role identifications associated with nodes that may be connected to the ports of a switch such as the switch 200 of the subsystem 120. The node role identifications may each have associated configuration data and constraint data. The node role identifications and associated configuration and constraint data may be stored in a database in the memory 208. On connection of a node such as the node 220 to one of the ports of the switch 200, the switch 200 receives a discovery packet (504). The switch 200 determines the role identity information of the node 220 from the received discovery packet (506). The switch 200 then matches the role identity information with the role identifications in the database (508).

The switch 200 determines if there is a match between the received role identify information from the packet and the stored role identification information (510). If a match is made, the switch 200 then accesses the associated policy information with the matching role identification from the memory 208 (512). The configuration data of the retrieved matching role identification is accessed by the switch 200 from the memory 208 and is used to configure the port connected to the node (514).

If a match is not made, the switch 200 queries the control node 110 via the management port 206 for a policy that matches the received role identity information (516). The switch determines if there is a role match between the received role identity information and the role identification information from the control node 110 (518). If no matching role identification is received, the switch 200 selects a default configuration for the port (520). The default configuration is used to configure the port (514). If a matching role identification is received from the control node, the switch selects a configuration to the port according to the associated configuration data of the policy (522). The selected configuration data is used to configure the port (514).

Compared to conventional methods of configuration the ports on an Ethernet switch, the use of neighbor discovery protocols to carry role-based information so that Ethernet switches may automatically apply different configurations on different ports based on pre-defined or received policy data stored locally. By using the above described procedure using discovery protocols, the distributed network system is more flexible and has higher mobility at the MAC-layer level of Ethernet switches.

As used in this application, the terms "component," "module," "system," or the like are generally intended to refer to a computer-related entity, either hardware (e.g., a circuit), a combination of hardware and software, software, or an entity related to an operational machine with one or more specific functionalities. For example, a component may be, but is not limited to being, a process running on a processor (e.g., digital signal processor), a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers. Further, a "device" can come in the form of specially designed hardware; generalized hardware made specialized by the execution of software thereon that enables the hardware to perform specific function; software stored on a computer-readable medium; or a combination thereof.

Computing devices typically include a variety of media, which can include computer-readable storage media and/or communications media, in which these two terms are used herein differently from one another as follows. Computer-readable storage media can be any available storage media that can be accessed by the computer, is typically of a non-transitory nature, and can include both volatile and nonvolatile media, removable and non-removable media. By way of example, and not limitation, computer-readable storage media can be implemented in connection with any method or technology for storage of information such as computer-readable instructions, program modules, structured data, or unstructured data. Computer-readable storage media can include, but are not limited to, RAM, ROM, EEPROM, flash memory or other memory technology, CD-ROM, digital versatile disk (DVD) or other optical disk storage, magnetic cassettes, magnetic tape, magnetic disk storage or other magnetic storage devices, or other tangible and/or non-transitory media which can be used to store desired information. Computer-readable storage media can be accessed by one or more local or remote computing devices, e.g., via access requests, queries or other data retrieval protocols, for a variety of operations with respect to the information stored by the medium.

The terminology used herein is for the purpose of describing particular embodiments only and is not intended to be limiting of the invention. As used herein, the singular forms "a", "an" and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A system to automatically configure a port on an Ethernet switch, the system comprising:
an Ethernet switch including a port connectable to a node;
a node coupled to the port of the Ethernet switch, wherein the node sends a discovery packet to the Ethernet switch, the discovery packet including role identity information of the node;
wherein the Ethernet switch determines whether the role identity information is matched to a role identification; and
wherein the Ethernet switch configures the port from configuration data associated with the role identification.

2. The system of the previous claim, wherein the role identification is stored in a memory of the Ethernet switch.

3. The system of any of the previous claims, further comprising a control node coupled to a management port of the Ethernet switch.

4. The system of the previous claim, wherein the Ethernet switch obtains a policy with the role identification from the control node if the role identity information is not matched with the role identification stored in the memory.

5. The system of the previous claim, wherein the Ethernet switch assign a default policy with the associated port configuration data if the role identity information is not matched with the role identification of the policy.

6. The system of any of the previous claims, wherein
the system is a management network, and/or wherein
the discovery packet includes a message authentication code, and wherein the Ethernet switch compares the message authentication code to authenticate the node before configuring the port.

7. The system of any of the previous claims, wherein the discovery packet is formatted according to a publically available protocol or wherein the discovery packet is formatted according to a proprietary protocol.

8. The system of any of the six previous claims, wherein
the memory includes a database that includes a plurality of role identifications including the role identification and corresponding port configuration data for each of the plurality of role identifications, and/or wherein
the memory includes constraint data associated with the role identification.

9. A method of automatically configuring a port on an Ethernet switch, the method comprising:
connecting a system node to the port;
receiving a discovery packet from the system node, the discovery packet include role identity information of the node;
matching the role identity information of the node to a role identification to determine associated port configuration data; and
configuring the port with the associated port configuration data.

10. The method of the previous claim, further comprising storing a role identification and the associated port configuration data in a memory on the Ethernet switch.

11. The method of the previous claim, further comprising obtaining a policy with a role identification and the associated port configuration data from a control node coupled to a management port of the Ethernet switch if the role identification in the memory does not match the role identity information.

12. The method of the previous claim, further comprising assigning a default policy with the associated port configuration data if the role identity information is not matched with the role identification of the policy, and/or wherein the control node is part of a management network.

13. The method of any of the four previous claims, wherein
the discovery packet includes a message authentication code, and the method further comprises comparing the message authentication code to authenticate the node before configuring the port, and/or wherein
the discovery packet is formatted according to one of a publically available protocol or a proprietary protocol.

14. The method of any of the four previous claims, wherein the memory includes a database that includes a plurality of role identifications including the role identification and corresponding port configuration data for each of the plurality of role identifications.

15. An Ethernet switch that automatically configures a port, the Ethernet switch comprising:
a port connectable to a system node;
a controller, the controller operative to:
receive a discovery packet from the system node, the discovery packet including role identity information of the node;
determining whether the role identity information matches a role identification having an associated port configuration; and
configuring the port with the associated port configuration data.
